# FASCICULE DE BREVET EUROPEEN

(11) **EP 3 470 137 B1**
(45) Date de publication et mention de la délivrance du brevet: **10.04.2024**
(21) Numéro de dépôt: 18199193.6
(22) Date de dépôt: 08.10.2018
(51) Int. Cl.: C10G 75/00, B01J 19/24, B01J 19/26, C10G 47/26, C10G 51/04, C10G 65/10, C10G 65/12, C10G 67/04

(54) **PROCÉDÉ DE CONVERSION DE CHARGES HYDROCARBONÉES METTANT EN OEUVRE UN DISPOSITIF COMPRENANT DES INJECTIONS LATÉRALES DE LIQUIDE POUR LIMITER LES PHÉNOMÈNES DE DÉPÔTS SOLIDES DANS LES ÉQUIPEMENTS A FOND CONIQUE**
VERFAHREN ZUR UMWANDLUNG VON KOHLENWASSERSTOFFEINSÄTZEN UNTER VERWENDUNG EINER VORRICHTUNG MIT SEITLICHEN FLÜSSIGKEITSEINSPRITZUNGEN ZUR BEGRENZUNG DER PHÄNOMENE DER ABLAGERUNGEN VON FESTKÖRPERN IN GERÄTEN MIT KONISCHEM BODEN
PROCESS FOR CONVERTING HYDROCARBON FEEDSTOCKS USING A DEVICE COMPRISING SIDE INJECTIONS OF LIQUID TO LIMIT THE PHENOMENA OF SOLID DEPOSITS IN EQUIPMENT WITH A CONICAL BOTTOM

(30) Priorité: 13.10.2017 FR 1759606
(43) Date de publication de la demande: 17.04.2019
(73) Titulaire: IFP Energies nouvelles, 92852 Rueil-Malmaison Cedex (FR)
(72) Inventeur: AMBLARD, Benjamin, 69007 Lyon (FR); MARQUES, Joao, 38670 Chasse sur Rhone (FR); LE COZ, Jean-François, 78100 Saint Germain en Laye (FR)
(74) Mandataire: IFP Energies nouvelles

(56) Documents cités:
- US-A- 3 846 079
- US-A- 4 146 359
- US-A1- 2016 346 758
- US-B1- 6 238 912

## Description

L'invention concerne le domaine de la réduction des dépôts de sédiments ou de molécules instables ou insolubles dans les équipements de séparation et de distillation préférentiellement à fond conique, qui sont mis en oeuvre en aval des procédés de raffinage traitant des produits lourds ou encrassants. L'invention s'applique de façon non exhaustive aux procédés produisant des liquides susceptibles d'encrasser les équipements, comme la viscoréduction, l'hydrocraquage en lit bouillonnant, le craquage catalytique, la cokéfaction retardée en raffinage de produits pétroliers ainsi que les procédés de liquéfaction de charbon et de traitement de biomasse.

### Art antérieur

La réduction des dépôts encrassant les équipements est une problématique majeure dans les unités de traitement ou conversion des charges hydrocarbonées, notamment pour les charges lourdes. En effet, l'encrassement des équipements impose l'arrêt de l'unité et son démontage pour effectuer le nettoyage. Dans les unités de conversion de charges hydrocarbonées en lit bouillonnant, notamment, l'encrassement des parois et du fond des équipements de séparation peut être dû à des particules de nature asphalténique qui floculent pour former des dépôts solides, des molécules qui s'adsorbent à la paroi, des particules de coke, des fines de catalyseurs, des sulfures métalliques à base de nickel, fer et/ou vanadium ou plus généralement tout solide contenu dans la charge hydrocarbonée traitée.

La demande de brevet US4534851A décrit une méthode d'introduction d'une charge liquide hydrocarbonée dans une conduite de transfert vers une zone réactionnelle, comprenant une injection de vapeur et de la charge hydrocarbonée en écoulement ascendant avec des flux concentriques séparés, le flux de charge hydrocarbonée étant le flux interne et le flux de vapeur étant le flux circonférentiel, et la direction d'une partie de la vapeur vers la paroi interne de ladite conduite de transfert, tandis que le reste de la vapeur et de la charge hydrocarbonée sont évacués de la zone dans une direction parallèle à l'axe longitudinal.

Cependant cette demande ne décrit pas de dispositif permettant la réduction des zones stagnantes par le recyclage du liquide hydrocarboné ou un appoint de liquide externe à la fois à l'intérieur de la partie tronconique et/ou à l'intérieur de la partie cylindrique de l'équipement.

US3846079 divulgue un procédé de conversion de charges carbonées utilisant un dispositif pour l'écoulement d'un liquide comprenant des particules solides constitué d'une partie cylindrique munie d'injecteurs et d'une partie tronconique.

### Résumé de l'invention

L'invention concerne un procédé de conversion de charges hydrocarbonées mettant en oeuvre un dispositif pour l'écoulement descendant d'un liquide hydrocarboné contenant des particules solides en fond d'un équipement (1) comprenant une partie supérieure cylindrique (11) de diamètre D1, une partie inférieure tronconique (12) d'angle d'inclinaison α compris entre 5° et 85°par rapport à l'axe vertical (z) de ladite partie supérieure cylindrique, une conduite de sortie (9) de diamètre D2, caractérisé en ce qu'il comprend :
- au moins une injection (5) de liquide recyclé et/ou d'appoint dans la partie tronconique (12) de l'équipement (1) ;
- au moins une injection (6) de liquide recyclé et/ou d'appoint dans la partie cylindrique (11) de l'équipement (1) ;

la ou lesdites injections (5) situées dans ladite partie tronconique étant inclinées par rapport à la paroi de la partie inférieure tronconique d'un angle β1 dans le plan vertical (xz) et d'un angle β2 dans le plan horizontal (xy) ; la ou lesdites injections (6) situées dans ladite partie cylindrique étant inclinées par rapport à la paroi de la partie supérieure cylindrique d'un angle θ1 dans le plan vertical (xz) et d'un angle θ2 dans le plan horizontal (xy), les angles β1 et θ1 étant compris entre 5° et 175°, les angles β2 et θ2 étant compris entre 90° et 270°, et
dans lequel la vitesse du liquide V injecté dans lesdites injections est comprise entre 0,05 m.s⁻¹ et 40 m.s⁻¹, de préférence entre 0,1 m.s⁻¹ et 30 m.s⁻¹ et de manière très préférée entre 0,5 m.s⁻¹ et 10 m.s⁻¹.

Avantageusement, le dispositif mis en oeuvre dans le procédé selon l'invention comprend une conduite de recyclage (4) d'une partie du liquide sortant de ladite conduite de sortie (9), ladite conduite de recyclage (4) alimentant en liquide recyclé au moins une desdites injections (5) ou (6).

Le dispositif mis en oeuvre dans le procédé selon l'invention peut comprendre une conduite d'appoint (10) pour alimenter en liquide d'appoint au moins une desdites injections (5) ou (6).

Lesdites injections peuvent être réparties par couches horizontales (7) dans la partie tronconique et par couches horizontales (8) dans la partie cylindrique respectivement.

Avantageusement, le rapport entre le diamètre D1 de la partie cylindrique et le diamètre D2 de la conduite de sortie en fond de la partie tronconique (D1/D2) est compris entre 1,1 et 1000, de préférence entre 2 et 500 et de manière préférée entre 3 et 100.

Avantageusement, l'angle α est compris entre 10° et 70°, de préférence entre 15° et 60° et de manière très préférée entre 30° et 50°.

De préférence, les angles β1 et θ1 sont compris entre 10° et 150°, de manière très préférée entre 15° et 120°, de manière plus préférée entre 15° et 90°et de manière encore plus préférée entre 20° et 60°.

De préférence, les angles β2 et θ2 sont compris entre 90° et 180°.

De manière très préférée, les angles β2 et θ2 sont égaux à 90°.

Avantageusement, le diamètre D1 est compris entre 0,1 m et 30 m, de préférence entre 0,5 m et 20 m, et de manière très préférée entre 1 m et 10 m.

Avantageusement, la hauteur H entre deux couches horizontales est comprise entre 0,01 m et 10 m, de préférence entre 0,05 m et 5 m et de manière très préférée entre 0,1 m et 1 m.

De préférence, le nombre d'injections N par couche est compris entre 1 et 30.

De préférence, le nombre d'injections par couche est compris entre 2 et 20, lesdites injections au sein d'une même couche étant espacées d'un angle δ égal à 360/N où N désigne le nombre d'injections par couche.

De manière très préférée, le nombre d'injections par couche est compris entre 2 et 10, de manière encore plus préférée entre 2 et 6.

De préférence, l'équipement (1) est un moyen de séparation gaz/liquide permettant de traiter des charges hydrocarbonées.

Le dispositif peut être situé dans la partie inférieure d'une colonne de distillation atmosphérique ou sous vide ou ballon de séparation.

De préférence, ledit procédé met en oeuvre une étape d'hydroconversion en lit bouillonnant pour des charges contenant des fractions d'hydrocarbures dont au moins 50 % poids ont une température d'ébullition supérieure à 300°C.

Le taux d'injection de liquide injecté par les injections (5) et (6) par rapport au liquide circulant dans l'équipement (1) est avantageusement compris entre 1% et 400%, de préférence entre 5% et 100%, de manière très préférée entre 10% et 60% et de manière encore plus préférée entre 20 et 50%.

### Présentation succincte des figures

D'autres caractéristiques et avantages du dispositif mis en oeuvre dans le procédé selon l'invention, apparaîtront à la lecture de la description ci-après d'exemples non limitatifs de réalisations, en se référant aux figures annexées et décrites ci-après.
**Figure 1** : La figure 1 représente le schéma de principe du dispositif mis en oeuvre dans le procédé selon l'invention.
**Figure 2** **:** La figure 2 illustre la mise en oeuvre des injections de liquide hydrocarboné recyclé et/ou d'appoint à l'intérieur des parties cylindrique et tronconique de l'équipement.
**Figure 3** **:** La figure 3 illustre le dispositif mis en oeuvre dans le procédé selon l'invention et la mise en oeuvre d'injections latérales multiples de liquide dans les parties cylindrique et tronconique de l'équipement - Vue de face et vue de haut : (3A) injections multiples (6) dans la partie cylindrique de l'équipement 1 ; (3B) injections multiples (5) dans la partie tronconique de l'équipement 1
**Figure 4** : La Figure 4 (4A : vue isométrique, 4B : vue de haut) présente pour la configuration sans injection, les parties de l'équipement où la fraction volumique de la phase solide est supérieure à 0,1 % en volume. Ces zones montrent les zones d'accumulation de particules solides.
**Figure 5** : La Figure 5 présente pour la configuration avec injections, les parties de l'équipement où la fraction volumique de la phase solide est supérieure à 0,1 % en volume.

### Description détaillée de l'invention

De manière générale, l'invention s'applique à tout équipement dans lequel circule un liquide hydrocarboné avec possibilité de stagnation et accumulation de particules solides en fond d'équipement. Plus particulièrement, le dispositif mis en oeuvre dans le procédé selon l'invention est situé dans la partie inférieure d'une colonne de distillation atmosphérique ou sous vide, ballon de séparation ou tout autre moyen de séparation gaz/liquide permettant de traiter des charges hydrocarbonées.

Dans la suite du texte, on désigne par « injection » tout moyen connu de l'homme du métier permettant d'injecter du liquide depuis la paroi de l'équipement vers l'intérieur, ledit moyen étant alimenté par au moins une conduite de transport de liquide.

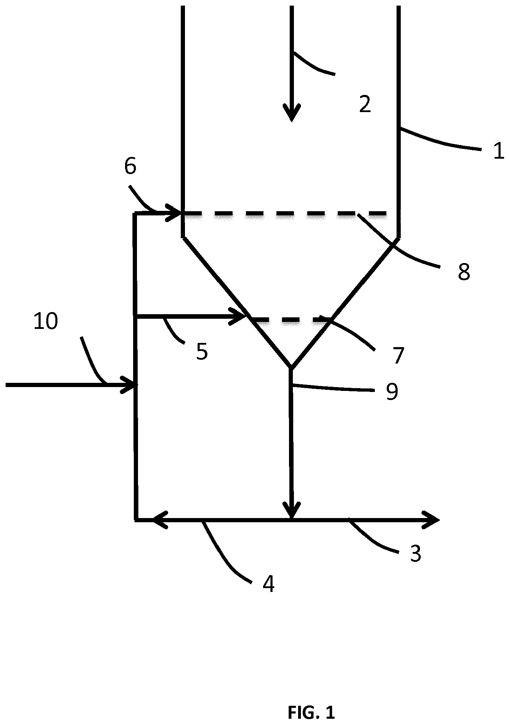

La Figure 1 présente le schéma de principe de l'invention.

L'invention est mise en oeuvre dans un équipement (1) à fond conique, c'est-à-dire comprenant une partie supérieure cylindrique (11) et une partie inférieure tronconique (12) où un liquide hydrocarboné (2) encrassant (c'est-à-dire un liquide contenant des particules solides ou des composés susceptibles de floculer ou de s'adsorber à la paroi) s'écoule de manière descendante à partir du haut de l'équipement et sort à travers une conduite de sortie (9). La forme tronconique est bien connue de l'homme du métier pour minimiser le dépôt dans le fond en facilitant le drainage des solides par gravité vers la conduite de sortie. Afin de réduire la formation des dépôts en paroi et dans le fond de l'équipement, le dispositif comprend des injections latérales de liquide recyclé et/ou d'appoint : injections dans la partie tronconique (5) et injections dans la partie cylindrique (6). Ces injections peuvent être réparties à la paroi selon des couches horizontales dans la partie tronconique (7) et selon des couches horizontales dans la partie cylindrique (8). Le flux liquide sortant est évacué de l'équipement par une conduite d'évacuation (3).

Dans un premier mode de réalisation de l'invention, une conduite d'appoint de liquide (qui peut être un liquide fluxant) (10) alimente les injections latérales (5) et (6) situées dans la partie tronconique et dans la partie cylindrique, afin de réduire les zones stagnantes dans l'équipement (1) et de limiter les dépôts de particules solides sur les parois. Toute coupe de point d'ébullition supérieur ou égal au point d'ébullition du liquide hydrocarboné alimentant l'équipement (1), par exemple effluent de craquage catalytique (HCO), LCO, ou toute autre coupe VGO, AR, VR, DAO, extrait aromatique peut convenir comme liquide d'appoint. Selon ce mode de réalisation le débit de liquide sortant par la conduite d'évacuation (3) est égal à somme du débit de liquide hydrocarboné circulant dans l'équipement (2) et du débit de liquide d'appoint injecté dans la conduite d'appoint (10). Le liquide d'appoint injecté à travers la conduite d'appoint (10) permet de réduire les zones stagnantes en générant une turbulence dans l'équipement (1) afin de limiter les dépôts de particules solides sur les parois. Ledit liquide d'appoint injecté peut également jouer un rôle de fluxant lorsque le liquide choisi est une base aromatique.

Selon un autre mode de réalisation de l'invention, une partie du liquide hydrocarboné sortant de l'équipement (1) peut être recyclée pour alimenter les injections latérales (5) et (6). Selon ce mode de réalisation le débit de liquide sortant par la conduite d'évacuation (3) est égal au débit du liquide (2). Le liquide recyclé à travers la conduite de recyclage (4) permet de réduire les zones stagnantes dans l'équipement (1) en générant une turbulence afin de limiter les dépôts de particules solides sur les parois.

Selon un dernier mode de réalisation de l'invention, le liquide injecté dans les injections latérales (5) et (6) peut provenir à la fois de la conduite de recyclage (4) et de la conduite d'appoint de liquide (10). Selon ce mode de réalisation, le débit de liquide sortant par la conduite d'évacuation (3) est égal à la somme du débit de liquide hydrocarboné circulant dans l'équipement, dit liquide encrassant (2), et du débit de liquide d'appoint injecté dans la conduite d'appoint (10). Le liquide injecté à travers la conduite d'appoint (10) et à travers la conduite de recyclage (4) permet de réduire les zones stagnantes en générant une turbulence dans l'équipement (1) afin de limiter les dépôts de particules solides sur les parois et peut également jouer le rôle de fluxant évoqué précédemment.

Le liquide injecté par les injections latérales (5) et (6) peut donc être du liquide recyclé depuis l'équipement (1) et/ou du liquide d'appoint, c'est-à-dire un liquide provenant de l'extérieur de l'équipement (1).

On définit le taux d'injection du liquide injecté par les injections latérales (5) et (6) comme étant le rapport entre la somme du débit de liquide dans la conduite de recyclage (4) et du débit de liquide dans la conduite d'appoint (10) sur le débit de liquide hydrocarboné circulant dans l'équipement ou liquide encrassant (2).

La charge entrant dans le dispositif peut contenir tout type de composés issus d'un effluent d'un procédé d'hydroconversion, par exemple issu d'une unité lit bouillonnant H-OIL ^{™}, mais également tout type de composés issus d'un procédé d'hydroconversion en slurry, d'un procédé d'hydrotraitement en lit fixe, lit mobile, lit fluidisé, effluent de craquage catalytique (FCC), effluents des procédés de conversion thermique comme le coking, le visbreaking, et tout autre procédé de séparation comme par exemple le désasphaltage au solvant.

Les particules solides peuvent être des asphaltènes précipités, des fines de catalyseurs supportés ou non supportés (usuellement de diamètre inférieur à 500 microns) ou des particules de coke, des sulfures de métaux tels que nickel, vanadium, fer, molybdène.

L'écoulement dans le dispositif se fait de manière descendante, le dispositif utilisé dans procédé selon l'invention peut être mis en oeuvre en fond de colonne de distillation sous vide ou en fond de colonne atmosphérique ou en fond de tout séparateur gaz-liquide.

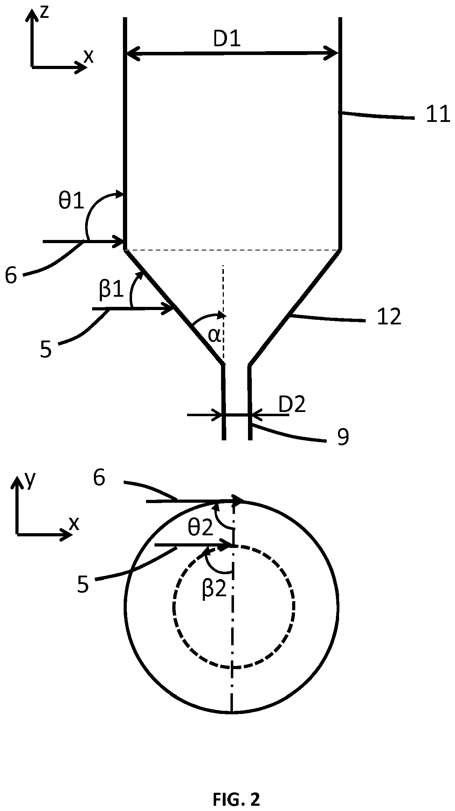

La Figure 2 présente les différents types d'injections latérales de la partie recyclée du liquide ou du liquide d'appoint.

L'équipement 1, qui peut être par exemple une colonne de distillation ou un séparateur, possède une partie supérieure cylindrique (11) de diamètre D1, une partie inférieure tronconique (12), une conduite de sortie (9) située en bas de l'équipement, par laquelle le liquide hydrocarboné sort, de diamètre D2. La partie tronconique (12) (aussi appelée fond conique) a un angle d'inclinaison α, par rapport à la paroi verticale de la partie cylindrique, matérialisée par l'axe z. Deux types d'injection de liquide (d'appoint ou recyclé) sont définis :
➢ Les injections (5) dans la partie tronconique de l'équipement (1).
➢ Les injections (6) dans la partie cylindrique de l'équipement (1).

Les injections (5) situées dans la partie tronconique (12) sont inclinées par rapport à la paroi du fond conique d'un angle β1 dans le plan vertical (xz) et d'un angle β2 dans le plan horizontal (xy), x désigne l'axe horizontal, z désigne l'axe vertical de la partie cylindrique perpendiculaire au plan horizontal (xy).

Les injections (6) situées dans la partie cylindrique (11) sont inclinées par rapport à la paroi du corps cylindrique d'un angle θ1 dans le plan vertical (xz) et d'un angle θ2 dans le plan horizontal (xy).

Les injections sont avantageusement orientées dans le même sens de rotation dans le plan horizontal (xy) et situées avantageusement dans la partie liquide du fond de colonne.

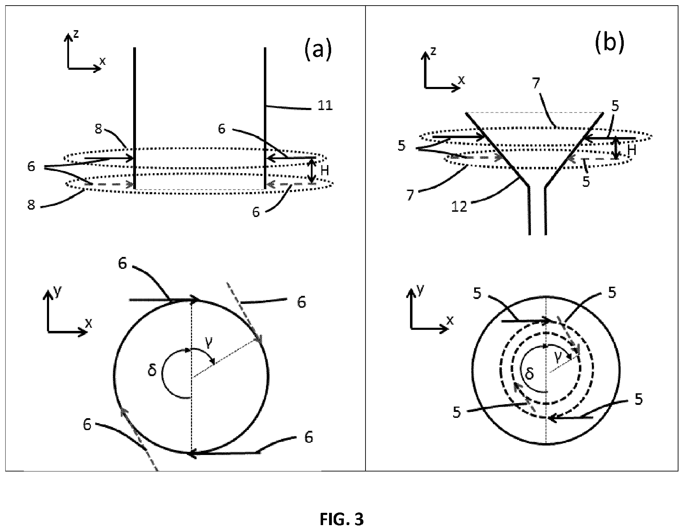

La Figure 3A présente la mise en oeuvre multiple d'injections (6) dans la partie cylindrique (11) de l'équipement (1), la Figure 3B présente la mise en oeuvre multiple d'injections (5) dans la partie tronconique (12) de l'équipement (1).

La mise en place des injections à la paroi de l'équipement est effectuée suivant des couches horizontales (8) dans le plan (xy) pour les injections (6) dans la partie cylindrique (11) et suivant des couches horizontales (7) pour les injections (5) dans la partie tronconique (12). Chaque couche d'injections (7) dans la partie tronconique (12) et (8) dans la partie cylindrique (11) comprend respectivement un nombre N d'injections (5) ou (6) localisées à la même hauteur sur l'axe (z). Sur la Figure 3, N est égal à 2. Chaque couche est séparée par une hauteur H. A l'intérieur d'une couche, chaque injection est séparée de la suivante par un angle δ égal à 360/N dans le plan (xy). Comme montré sur la Figure 3, une couche d'injections peut être décalée par rapport à une autre couche d'injections d'un angle γ dans le plan (xy).

Le nombre de couches dans chacune des parties tronconique ou cylindrique est avantageusement compris entre 1 et 20, de préférence entre 1 et 10 et de manière préférée entre 1 et 6.

La vitesse du liquide V injecté dans les conduites d'injections latérales (5) et (6) est comprise entre 0,05 m.s⁻¹ et 40 m.s⁻¹, de préférence entre 0,1 m.s⁻¹ et 30 m.s⁻¹ et de manière très préférée entre 0,5 m.s⁻¹ et 10 m.s⁻¹. De manière préférée, les diamètres des conduites d'injection sont dimensionnés en fonction du débit de liquide à injecter afin d'obtenir les vitesses d'injection souhaitées.

Le débit de liquide recyclé par la conduite de recyclage (4) plus le débit de liquide injecté par la conduite (10) sur le débit de liquide hydrocarboné (2) circulant dans l'équipement (1) est avantageusement compris entre 1% et 400%, de préférence entre 5% et 100%, de manière très préférée entre 10% et 60% et de manière encore plus préférée entre 20 et 50%.

Le diamètre D1 de la partie cylindrique (11) de l'équipement (1) est avantageusement compris entre 0,1 m et 30 m, de préférence entre 0,5 m et 20 m, et de manière très préférée entre 1 m et 10 m.

Le rapport entre le diamètre D1 de la partie cylindrique (11) et le diamètre D2 de la conduite de sortie (9) en fond de la partie tronconique (D1/D2) est avantageusement compris entre 1,1 et 1000, de préférence entre 2 et 500 et de manière préférée entre 3 et 100.

L'angle α est l'angle d'inclinaison de la partie tronconique par rapport à la paroi verticale (d'axe z) de la partie cylindrique et est compris de manière avantageuse entre 5° et 85°, de préférence entre 10 et 70°, de manière très préférée entre 15 et 60° et de manière encore plus préférée entre 30 et 50°.

Les angles β1 et θ1 sont compris entre 5° et 175° par rapport respectivement à la paroi de la partie tronconique et à la paroi de la partie cylindrique, de préférence entre 10° et 150°, de manière très préférée entre 15° et 120° et de manière plus préférée entre 15° et 90°et de manière encore plus préférée entre 20° et 60°.

Les angles β2 et θ2 sont compris entre 90° et 270° par rapport au diamètre selon l'axe γ de la section cylindrique, et de manière préférée entre 90° et 180°. De manière très préférée, les angles β2 et θ2 sont égaux à 90°.

Le nombre d'injections N à la paroi de l'équipement, dans chaque couche horizontale (8) dans la partie cylindrique (11) et dans chaque couche horizontale (7) dans la partie tronconique (12) est compris entre 1 et 30, de préférence entre 2 et 20, de manière très préférée entre 2 et 10, de manière plus préférée entre 2 et 6. Chaque couche, que ce soit au sein d'une même partie ou dans les deux parties, peut avoir un nombre d'injections N différent.

La hauteur H entre deux couches est avantageusement comprise entre 0,01 m et 10 m, de préférence entre 0,05 m et 5 m et de manière très préférée entre 0,1 m et 1 m.

L'angle δ séparant les injections dans la circonférence d'une même couche est compris entre 0° et 180°, de préférence entre 5° et 120°, de manière très préférée entre 10° et 90°. De manière avantageuse, l'angle δ est égal à 360/N où N désigne le nombre d'injections par couche.

L'angle γ désigne le décalage angulaire d'une couche par rapport à l'autre. Cet angle peut être compris entre 0° et 180°, de préférence entre 5° et 120°, de manière très préférée entre 10° et 90°.

### Exemples

Des simulations en mécanique des fluides numérique CFD (en anglais « Computational Fluid Dynamics ») de l'écoulement liquide/particules dans un équipement à fond conique sans injections (comparatif) et dans le même équipement à fond conique comprenant un dispositif avec des injections latérales de liquide recyclé selon l'invention ont été effectuées avec le logiciel Barracuda^{™}. Ce logiciel utilise une approche Eulérienne pour la phase fluide et une approche pseudo-lagrangienne pour la phase particulaire (voir publication D.M. Snider, An Incompressible Three-Dimensional Multiphase Particle-in-Cell Model for Dense Particle Flows, Journal of Computational Physics 170 (2001), 523-549**).**

Le tableau 1 présente les conditions simulées, ainsi que les caractéristiques et dimensions de l'équipement, incluant le dispositif mis en oeuvre dans le procédé selon l'invention (nombre d'injections, nombre de couches, angles d'injection).

**Tableau 1**

| **Dimensions équipements** | |
|---|---|
| Diamètre D1 (m) | 1,2 |
| Diamètre D2 (m) | 0,25 |
| Angle α | 45° |
| Nombre de couches dans la partie cylindrique | 1 |
| Nombre de couches dans la partie tronconique | 1 |
| Nombre d'injections par couche | 2 |
| Angle β1 et θ1 | 30° |
| Angle β2 et θ2 | 90° |

| **Conditions opératoires** | |
|---|---|
| Masse volumique liquide hydrocarboné (2) (kg/m³) | 990 |
| Débit liquide hydrocarboné circulant (2) (kg/s) | 7,5 |
| Taux d'injection (débit du liquide recyclé dans la conduite (4) sur débit liquide hydrocarboné circulant (2)) | 30% |
| Masse volumique particules solides (kg/m³) | 2800 |
| Diamètre particules solides (microns) | 50 |
| Débit particules solides (kg/s) | 0,02 |

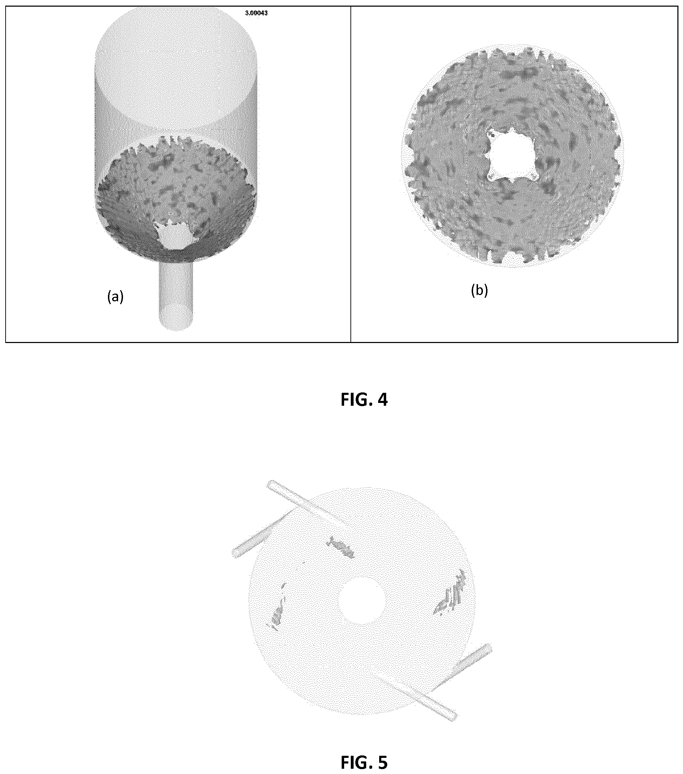

La Figure 4 (4A : vue isométrique, 4B : vue de haut) présente pour la configuration sans injection (comparatif), les parties de l'équipement où la fraction volumique de la phase solide est supérieure à 0,1 % en volume. Ces zones représentent les zones d'accumulation de particules solides.

La Figure 5 présente pour la configuration avec injections selon l'invention, les parties de l'équipement où la fraction volumique de la phase solide est supérieure à 0,1 % en volume, en vue de dessus.

En comparant la figure 4B et la figure 5, on observe la diminution des zones d'accumulation de solide grâce à la mise en place des injections latérales de liquide avec le dispositif mis en oeuvre dans le procédé selon l'invention. Par un calcul volumique, il apparaît que dans la configuration selon l'invention, avec un recyclage de 30% du liquide hydrocarboné pour alimenter deux injections en partie tronconique et deux injections en partie cylindrique avec une géométrie conforme à l'invention, le nombre de zones d'accumulation telles que définies précédemment a été divisé par 30.

## Revendications

1. Procédé de conversion de charges hydrocarbonées mettant en oeuvre un dispositif pour l'écoulement descendant d'un liquide hydrocarboné contenant des particules solides en fond d'un équipement (1) comprenant une partie supérieure cylindrique (11) de diamètre D1, une partie inférieure tronconique (12) d'angle d'inclinaison α compris entre 5° et 85°par rapport à l'axe vertical (z) de ladite partie supérieure cylindrique, une conduite de sortie (9) de diamètre D2, **caractérisé en ce qu'**il comprend :
- au moins une injection (5) de liquide recyclé et/ou d'appoint dans la partie tronconique (12) de l'équipement (1) ;
- au moins une injection (6) de liquide recyclé et/ou d'appoint dans la partie cylindrique (11) de l'équipement (1) ;
la ou lesdites injections (5) situées dans ladite partie tronconique étant inclinées par rapport à la paroi de la partie inférieure tronconique d'un angle β1 dans le plan vertical (xz) et d'un angle β2 dans le plan horizontal (xy) ; la ou lesdites injections (6) situées dans ladite partie cylindrique étant inclinées par rapport à la paroi de la partie supérieure cylindrique d'un angle θ1 dans le plan vertical (xz) et d'un angle θ2 dans le plan horizontal (xy), les angles β1 et θ1 étant compris entre 5° et 175°, les angles β2 et θ2 étant compris entre 90° et 270°, et
dans lequel la vitesse du liquide V injecté dans lesdites injections est comprise entre 0,05 m.s⁻¹ et 40 m.s⁻¹, de préférence entre 0,1 m.s⁻¹ et 30 m.s⁻¹ et de manière très préférée entre 0,5 m.s⁻¹ et 10 m.s⁻¹.

2. Procédé selon la revendication 1, dans lequel le dispositif comprend une conduite de recyclage (4) d'une partie du liquide sortant de ladite conduite de sortie (9), ladite conduite de recyclage (4) alimentant en liquide recyclé au moins une desdites injections (5) ou (6).

3. Procédé selon l'une des revendications 1 ou 2, dans lequel le dispositif comprend une conduite d'appoint (10) pour alimenter en liquide d'appoint au moins une desdites injections (5) ou (6).

4. Procédé selon l'une des revendications précédentes dans lequel lesdites injections sont réparties par couches horizontales (7) dans la partie tronconique et par couches horizontales (8) dans la partie cylindrique respectivement.

5. Procédé selon l'une des revendications précédentes dans lequel le rapport entre le diamètre D1 de la partie cylindrique et le diamètre D2 de la conduite de sortie en fond de la partie tronconique (D1/D2) est compris entre 1,1 et 1000, de préférence entre 2 et 500 et de manière préférée entre 3 et 100.

6. Procédé selon l'une des revendications précédentes dans lequel l'angle α est compris entre 10° et 70°, de préférence entre 15° et 60° et de manière très préférée entre 30° et 50°.

7. Procédé selon l'une des revendications précédentes dans lequel les angles β1 et θ1 sont compris entre 10° et 150°, de manière très préférée entre 15° et 120°, de manière plus préférée entre 15° et 90°et de manière encore plus préférée entre 20° et 60°.

8. Procédé selon l'une des revendications précédentes dans lequel les angles β2 et θ2 sont compris entre 90° et 180°.

9. Procédé selon la revendication 8 dans lequel les angles β2 et θ2 sont égaux à 90°.

10. Procédé selon l'une des revendications 1 à 9 dans lequel le diamètre D1 est compris entre 0,1 m et 30 m, de préférence entre 0,5 m et 20 m, et de manière très préférée entre 1 m et 10 m.

11. Procédé selon l'une des revendications 4 à 10 dans lequel la hauteur H entre deux couches horizontales est comprise entre 0,01 m et 10 m, de préférence entre 0,05 m et 5 m et de manière très préférée entre 0,1 m et 1 m.

12. Procédé selon l'une des revendications 4 à 11 dans lequel le nombre d'injections N par couche est compris entre 1 et 30.

13. Procédé selon la revendication 12 dans lequel le nombre d'injections par couche est compris entre 2 et 20, lesdites injections au sein d'une même couche étant espacées d'un angle δ égal à 360/N où N désigne le nombre d'injections par couche.

14. Procédé selon la revendication 13 dans lequel le nombre d'injections par couche est compris entre 2 et 10, de préférence entre 2 et 6.

15. Procédé selon l'une des revendications précédentes, dans lequel le dispositif est situé dans la partie inférieure d'une colonne de distillation atmosphérique ou sous vide ou ballon de séparation.

16. Procédé selon l'une des revendications précédentes, mettant en oeuvre une étape d'hydroconversion en lit bouillonnant pour des charges contenant des fractions d'hydrocarbures dont au moins 50 % poids ont une température d'ébullition supérieure à 300°C.

17. Procédé selon l'une des revendications précédentes, dans lequel le taux d'injection de liquide recyclé et/ou d'appoint par rapport au liquide hydrocarboné circulant dans l'équipement est compris entre 1% et 400%, de préférence entre 5% et 100%, de manière très préférée entre 10% et 60% et de manière encore plus préférée entre 20 et 50%.

## Patentansprüche

1. Verfahren zur Umwandlung von kohlenwasserstoffhaltigen Chargen, das eine Vorrichtung zum Abwärtsströmen einer feste Partikel enthaltenden kohlenwasserstoffhaltigen Flüssigkeit am Boden einer Ausrüstung (1) einsetzt, umfassend einen zylindrischen oberen Teil (11) mit dem Durchmesser D1, einen kegelstumpfförmigen unteren Teil (12) mit einem Neigungswinkel α zwischen 5° und 85° in Bezug auf die vertikale Achse (z) des zylindrischen oberen Teils und eine Auslassleitung (9) mit dem Durchmesser D2, **dadurch gekennzeichnet, dass** es umfasst:
- mindestens eine Einspritzung (5) von rückgeführter und/oder Nachspeiseflüssigkeit in den kegelstumpfförmigen Teil (12) der Ausrüstung (1);
- mindestens eine Einspritzung (6) von rückgeführter und/oder Nachspeiseflüssigkeit in den zylindrischen Teil (11) der Ausrüstung (1);
wobei die Einspritzung oder Einspritzungen (5), die in dem kegelstumpfförmigen Teil gelegen sind, in Bezug auf die Wand des kegelstumpfförmigen unteren Teils um einen Winkel β1 in der vertikalen Ebene (xz) und um einen Winkel β2 in der horizontalen Ebene (xy) geneigt sind, wobei die Einspritzung oder Einspritzungen (6), die in dem zylindrischen Teil gelegen sind, in Bezug auf die Wand des zylindrischen oberen Teils um einen Winkel θ1 in der vertikalen Ebene (xz) und um einen Winkel θ2 in der horizontalen Ebene (xy) geneigt sind, wobei die Winkel β1 und θ1 zwischen 5° und 175° betragen, wobei die Winkel β2 und θ2 zwischen 90° und 270° betragen, und
bei dem die Geschwindigkeit der in den Einspritzungen eingespritzten Flüssigkeit V zwischen 0,05 m.s⁻¹ und 40 m.s⁻¹, bevorzugt zwischen 0,1 m.s⁻¹ und 30 m.s⁻¹ und besonders bevorzugt zwischen 0,5 m.s⁻¹ und 10 m.s⁻¹ beträgt.

2. Verfahren nach Anspruch 1, wobei die Vorrichtung eine Rückführleitung (4) zum Rückführen eines Teils der aus der Auslassleitung (9) austretenden Flüssigkeit umfasst, wobei die Rückführleitung (4) mindestens einer der Einspritzungen (5) oder (6) rückgeführte Flüssigkeit zuführt.

3. Verfahren nach einem der Ansprüche 1 oder 2, wobei die Vorrichtung eine Nachspeiseleitung (10) umfasst, um mindestens einer der Einspritzungen (5) oder (6) Nachspeiseflüssigkeit zuzuführen.

4. Verfahren nach einem der vorhergehenden Ansprüche, wobei die Einspritzungen in dem kegelstumpfförmigen Teil in horizontalen Schichten (7) und in dem zylindrischen Teil in horizontalen Schichten (8) verteilt sind.

5. Verfahren nach einem der vorhergehenden Ansprüche, wobei das Verhältnis zwischen dem Durchmesser D1 des zylindrischen Teils und dem Durchmesser D2 der Auslassleitung am Boden des kegelstumpfförmigen Teils (D1/D2) zwischen 1,1 und 1000, bevorzugt zwischen 2 und 500 und besonders bevorzugt zwischen 3 und 100 beträgt.

6. Verfahren nach einem der vorhergehenden Ansprüche, wobei der Winkel α zwischen 10° und 70°, bevorzugt zwischen 15° und 60° und besonders bevorzugt zwischen 30° und 50° beträgt.

7. Verfahren nach einem der vorhergehenden Ansprüche, wobei die Winkel β1 et θ1 zwischen 10° und 150°, bevorzugt zwischen 15° und 120°, noch bevorzugter zwischen 15° und 90° und besonders bevorzugt zwischen 20° und 60° betragen.

8. Verfahren nach einem der vorhergehenden Ansprüche, wobei die Winkel β2 et θ2 zwischen 90° und 180° betragen.

9. Verfahren nach Anspruch 8, wobei die Winkel β2 und θ2 gleich 90° sind.

10. Verfahren nach einem der Ansprüche 1 bis 9, wobei der Durchmesser D1 zwischen 0,1 m und 30 m, bevorzugt zwischen 0,5 m und 20 m und besonders bevorzugt zwischen 1 m und 10 m beträgt.

11. Verfahren nach einem der Ansprüche 4 bis 10, wobei die Höhe H zwischen zwei horizontalen Schichten zwischen 0,01 m und 10 m, bevorzugt zwischen 0,05 m und 5 m und besonders bevorzugt zwischen 0,1 m und 1 m beträgt.

12. Verfahren nach einem der Ansprüche 4 bis 11, wobei die Anzahl von Einspritzungen N je Schicht zwischen 1 und 30 beträgt.

13. Verfahren nach Anspruch 12, wobei die Anzahl von Einspritzungen je Schicht zwischen 2 und 20 beträgt, wobei die Einspritzungen innerhalb einer selben Schicht um einen Winkel δ gleich 360/N beabstandet sind, wobei N die Anzahl von Einspritzungen je Schicht bezeichnet.

14. Verfahren nach Anspruch 13, wobei die Anzahl von Einspritzungen je Schicht zwischen 2 und 10, bevorzugt zwischen 2 und 6 beträgt.

15. Verfahren nach einem der vorhergehenden Ansprüche, wobei die Vorrichtung in dem unteren Teil einer atmosphärischen oder Vakuum-Destillationskolonne oder eines Trennkolbens gelegen ist.

16. Verfahren nach einem der vorhergehenden Ansprüche, das einen Schritt der Hydrokonversion im Siedebett für Chargen einsetzt, die Kohlenwasserstofffraktionen enthalten, von denen mindestens 50 Gew.-% eine Siedetemperatur von mehr als 300 °C haben.

17. Verfahren nach einem der vorhergehenden Ansprüche, wobei der Anteil der Einspritzung von rückgeführter und/oder Nachspeiseflüssigkeit in Bezug auf die in der Ausrüstung zirkulierende kohlenwasserstoffhaltige Flüssigkeit zwischen 1 % und 400 %, bevorzugt zwischen 5 % und 100 %, noch bevorzugter zwischen 10 % und 60 % und besonders bevorzugt zwischen 20 und 50 % beträgt.

## Claims

1. Method for the conversion of hydrocarbon feedstocks, implementing a device for the downflow of a hydrocarbon liquid containing solid particles in the bottom of an item of equipment (1) comprising a cylindrical upper part (11) of diameter D1, a frustoconical lower part (12) of angle of inclination α comprised between 5° and 85° with respect to the vertical axis (z) of said cylindrical upper part, and an outlet pipe (9) of diameter D2, **characterized in that** it comprises:
- at least one injection (5) of recirculated and/or makeup liquid into the frustoconical part (12) of the item of equipment (1);
- at least one injection (6) of recirculated and/or makeup liquid into the cylindrical part (11) of the item of equipment (1);
said one or more injections (5) situated in said frustoconical part being inclined with respect to the wall of the frustoconical lower part by an angle β1 in the vertical plane (xz) and by an angle β2 in the horizontal plane (xy); said one or more injections (6) situated in said cylindrical part being inclined with respect to the wall of the cylindrical upper part by an angle θ1 in the vertical plane (xz) and by an angle θ2 in the horizontal plane (xy), the angles β1 and θ1 being comprised between 5° and 175°, the angles β2 and θ2 being comprised between 90° and 270°, and
wherein the velocity V of the liquid injected in said injections is comprised between 0.05 m.s⁻¹ and 40 m.s⁻¹, for preference between 0.1 m.s⁻¹ and 30 m.s⁻¹ and very preferably between 0.5 m.s⁻¹ and 10 m.s⁻¹.

2. Method according to Claim 1, wherein the device comprises a recirculation pipe (4) for part of the liquid leaving said outlet pipe (9), said recirculation pipe (4) supplying at least one of said injections (5) or (6) with recirculated liquid.

3. Method according to either of Claims 1 and 2, wherein the device comprises a makeup pipe (10) for supplying at least one of said injections (5) or (6) with makeup liquid.

4. Method according to one of the preceding claims, wherein said injections are distributed in horizontal layers (7) in the frustoconical part and in horizontal layers (8) in the cylindrical part, respectively.

5. Method according to one of the preceding claims, wherein the ratio between the diameter D1 of the cylindrical part and the diameter D2 of the outlet pipe in the bottom of the frustoconical part (D1/D2) is comprised between 1.1 and 1000, for preference between 2 and 500 and preferably between 3 and 100.

6. Method according to one of the preceding claims, wherein the angle α is comprised between 10° and 70°, for preference between 15° and 60° and very preferably between 30° and 50°.

7. Method according to one of the preceding claims, wherein the angles β1 and θ1 are comprised between 10° and 150°, very preferably between 15° and 120°, more preferably between 15° and 90° and even more preferably between 20° and 60°.

8. Method according to one of the preceding claims, wherein the angles β2 and θ2 are comprised between 90° and 180°.

9. Method according to Claim 8, wherein the angles β2 and θ2 are equal to 90°.

10. Method according to one of Claims 1 to 9, wherein the diameter D1 is comprised between 0.1 m and 30 m, for preference between 0.5 m and 20 m, and very preferably between 1 m and 10 m.

11. Method according to one of Claims 4 to 10, wherein the height H between two horizontal layers is comprised between 0.01 m and 10 m, for preference between 0.05 m and 5 m and very preferably between 0.1 m and 1 m.

12. Method according to one of Claims 4 to 11, wherein the number of injections N per layer is comprised between 1 and 30.

13. Method according to Claim 12, wherein the number of injections per layer is comprised between 2 and 20, said injections within one and the same layer being spaced by an angle δ equal to 360/N where N denotes the number of injections per layer.

14. Method according to Claim 13, wherein the number of injections per layer is comprised between 2 and 10, for preference between 2 and 6.

15. Method according to one of the preceding claims, wherein the device is situated in the lower part of an atmospheric or vacuum distillation column or separation vessel.

16. Method according to one of the preceding claims, implementing an ebullated-bed hydroconversion step for feedstocks containing hydrocarbon fractions of which at least 50 % by weight have a boiling point above 300°C.

17. Method according to one of the preceding claims, wherein the level of recirculated and/or makeup liquid injected with respect to the hydrocarbon liquid circulating in the item of equipment is comprised between 1% and 400%, for preference between 5% and 100%, very preferably between 10% and 60% and even more preferably between 20 and 50%.
